# EUROPÄISCHE PATENTSCHRIFT

(11) **EP 0 616 961 B1**
(45) Veröffentlichungstag und Bekanntmachung des Hinweises auf die Patenterteilung: **07.01.1998**
(21) Anmeldenummer: 94250022.4
(22) Anmeldetag: 08.02.1994
(51) Int. Cl.: B65G 47/68

(54) **Hochgeschwindigkeits Trenn- und Ausrichtvorrichtung für Artikel**
High speed separating and aligning device for articles
Dispositif de séparation et d'alignement à haute vitesse d'articles

(30) Priorität: 25.03.1993 US 37035
(43) Veröffentlichungstag der Anmeldung: 28.09.1994
(73) Patentinhaber: MANNESMANN Aktiengesellschaft, 40213 Düsseldorf (DE)
(72) Erfinder: Taylor, Eric R., Rockford, MI 49341 (US); LeMay, Curtis E., Shelbyville, MI 40344 (US); Brouwer, Gerald A., Grandville, MI 49418 (US); Woltjer, Bernard H., Jenison, MI 49482 (US)
(74) Vertreter: Meissner, Peter E., Dipl.-Ing.

(56) Entgegenhaltungen:
- EP-A- 0 085 184
- DE-A- 1 811 986
- DE-A- 2 129 719

## Beschreibung

Die Erfindung betrifft eine Vorrichtung zum Trennen und Ausrichten von Artikeln gemäß dem Oberbegriff des Anspruches 1. Die Erfindung ist besonders gut brauchbar bei einer sehr großen Menge von Artikeln und ist besonders gut für den Einsatz in Paket-Verteilungszentren geeignet.

Derartige Paket-Verteilungszentren nehmen Pakete, oder Artikel auf, die in großen Mengen von Lastwagen oder anderen Transportmitteln abgeladen werden. Die Pakete laufen in zufälliger Orientierung und Reihenfolge in einem zentralen Bereich zusammen, wo sie für die weitere Handhabung in eine Orientierung gebracht und in einer einzigen Reihe ausgerichtet werden müssen. Die weitere Handhabung schließt typischerweise das Einscannen der Balkencodes für den Bestimmungsort und das Sortieren nach Bestimmungsgebieten für das Beladen auf Lastwagen oder andere Transportmittel ein.

Weil die Paket-Verteilungszentren in der Lage sein müssen, innerhalb von maximal 24 Stunden Pakete von jedem beliebigen Ort zu jedem anderen beliebigen Ort transportieren zu können, muß das Paket-Verteilungszentrum eine große Menge von Paketen in enger Packreihenfolge handhaben können. Die Trenn- und Ausrichtvorrichtung für die Artikel muß eine große Menge von Paketen in einer Rate verarbeiten können, die derjenigen von Hochgeschwindigkeitsfördersystemen entspricht, und zwar mit nur geringem bzw. gar keinem Auftreten von Beschädigungen an den Artikeln und mit nur minimalem manuellem Eingriff.

Aus der europäischen Patentanmeldung EP 0 085 184 ist bereits eine Vorrichtung zum Überführen von aufrechtstehenden Flaschen von einem Zuförderer auf einen Abförderer bekannt. Hierbei kommen die Flaschen in Reihen nebeneinander auf dem Zuförderer an und werden in einer einzigen Flaschenreihe hintereinander auf den Abförderer übergeben. Die Überführungsvorrichtung besteht im wesentlichen aus mehreren parallel nebeneinander und aneinander angrenzend verlaufenden Bandkettenförderern, die eine ebene Förderfläche bilden, die seitlich zur Hauptförderrichtung gesehen etwa 10° aus der Horizontalen heraus nach unten geneigt ist. Die Bandketten sind mit verschiedenen und jeweils in Gefällerichtung ansteigenden Geschwindigkeiten angetrieben. Hierdurch wird erreicht, daß die von dem Zuförderer in mehreren Reihen nebeneinander angeordneten Flaschen je nach Position auf den Bandketten der Überführungsvorrichtung mit unterschiedlichen Geschwindigkeiten in Hauptförderrichtung gesehen transportiert werden und somit voneinander getrennt werden. Gleichzeitig bewegen sich die Flaschen aufgrund der Neigung der Bandketten in Richtung der Bandkette mit der höchsten Geschwindigkeit. Anschließend werden die Flaschen in einer einzelnen Flaschenreihe auf den Abförderer übergeben.

Des weiteren ist in der deutschen Offenlegungsschrift DE 18 11 986 eine Einrichtung zum Fördern und Sortieren von Stückgut beschrieben, die bereits die Verwendung von kegelstumpfförmigen Antriebsrollen für Rundriemen eines Riemenförderers, und zwar dort im Bereich der Umlenkungen, beschreibt. Auch ist aus der deutschen Offenlegungsschrift DE 21 29 719 der Einsatz von kegelstumpfförmigen Rollen bekannt, um Stabmaterial aus Stahl, das aneinander angrenzend auf einem Förderer transportiert wird, durch ansteigende Fördergeschwindigkeiten voneinander zu beabstanden.

Mit der vorliegenden Erfindung soll die Möglichkeit geschaffen werden, in zufälliger Lage angeordnete Artikel sehr schnell zu trennen und in einer einzigen Reihe auszurichten, ohne daß die Artikel oder deren Inhalt beschädigt werden, und zwar mit einem hohen Maß an Genauigkeit.

Diese Aufgabe wird bei einer Vorrichtung zum Trennen und Ausrichten von Artikeln durch die im Anspruch 1 angegebene Merkmale gelöst. In den Unteransprüchen 2 bis 23 sind vorteilhafte Ausgestaltungen der Erfindung angegeben.

Die Erfindung ist in einer Artikel-Trenn- und -Ausrichtvorrichtung für große Mengen ausgebildet, die einen Aufnahmebereich, in dem Artikel in zufälliger Anordnung und Ausrichtung angeliefert werden, und einen Abladebereich aufweist, in dem die getrennten und ausgerichteten Artikel abgegeben werden. Die erfindungsgemäße Vorrichtung weist eine Artikel-Transportoperfläche auf, die derart ausgebildet ist, daß sie Artikel in longitudinaler Richtung von den Aufnahmebereich zum Abladebereich transportieren kann.

Nach einem Aspekt der Erfindung erzeugt die Artikel-Transportoberflache einen seitwärts zur, Förderrichtung der Artikel in Richtung des Abladebereichs gerichteten linearen Geschwindigkeistanstieg, um die seitlich benachbarten Artikel dazu zu bringen, sich in Richtung des Abladebereichs aneinander vorbei zu bewegen. Der lineare Geschwindigkeitsanstieg tendiert zusätzlich dazu, vorteilhafte Zwischenräume zwischen den Produkten zu schaffen, um anderen Produkten zu gestatten, sich in diese Zwischenräume hineinzubewegen und er erzeugt eine vorteilhafte, nicht gleichmäßige Rotation der Artikel, wodurch diese voneinander getrennt werden. Das Resultat ist ein Betrieb mit sehr hoher Geschwindigkeit, der Gruppen von Artikeln effektiv und effizient trennt, wobei die Artikel beschleunigt werden, während sie sich in Richtung auf die Abladebahn bewegen.

In einer besonderen Ausgestaltungsform wird der lineare Geschwindigkeitsanstieg durch sich seitwärts verjüngende Rollen erzeugt, um eine seitwärts gerichtete, linear anwachsende Oberflächengeschwindigkeit über die Rollen zu schaffen. Die sich verjüngenden Rollen sind vorzugsweise in Bahnen angeordnet, wobei jede Bahn mit einer zu den benachbarten Bahnen unterschiedlichen Rotationsgeschwindigkeit angetrieben wird. Ein Ausrichtband ist vorzugsweise entlang der Transportoberfläche in einer Linie mit dem Abladebereich vorgesehen und wird mit einer Geschwindigkeit angetrieben, die mindestens so groß wie diejenige eines benachbarten Bereichs der Transportoberfläche.

In einer weiteren Ausführungsform der Erfindung ist eine Trenn- und Ausrichtvorrichtung für große Mengen vorgesehen, bei der die Antriebsmittel separat mit jeder Rolle verbunden sind. Sollte der Antrieb für irgendeine der Artikel-Transportrollen ausfallen, muß nur diese spezielle Rolle inaktiviert werden, wobei der Rest der Vorrichtung mit voller Kapazität weiter genutzt werden kann. Dies ist bedeutend, um den hohen Durchsatz der Paket-Verteilungszentren aufrechtzuerhalten, für die die erfindugsgemäße Vorrichtung geeignet ist. Weiterhin darf jede Betriebsstorung nur von kurzer Dauer sein. Dieser Aspekt der Erfindung gestattet es für jede beliebige Artikel-Transportrolle, die aus irgendeinem Grund während der vorhergehenden Betriebsperiode betriebsunfähig geworden ist, schnell repariert zu werden, bevor die nächste Betriebsperiode beginnt. Somit wird die Verläßlichkeit und die Unversehrtheit des gesamten Systems gesteigert.

Die vorliegende Erfindung erleichtert das Trennen und Ausrichten einer großen Menge von Paketen, und zwar wegen ihrer effektiven Mittel zum Trennen der Artikel, dem Schaffen von Zwischenräumen zwischen den Artikeln und dem Ausrichten der Artikel in einer einzigen Reihe. Die vorliegende Erfindung erzielt dies auf effektivere Weise als die bisher bekannten Systeme und deshalb müssen weniger Pakete einer speziellen Handhabung unterzogen oder erneut in Umlauf gebracht werden.

Diese und andere Ziele, Vorteile und Merkmale der Erfindung werden in Hinblick auf die folgende Zeichnung und die Figurenbeschreibung des näheren beschrieben. Es zeigt:
Fig.1 eine schematische Draufsicht auf die erfindungsgemäße Trennvorrichtung;
Fig.1A die gleiche Ansicht wie in Fig.1, jedoch in reduziertem Maßstab, so daß die Eingabe- und Abgabeförderer fragmentarisch dargestellt werden können;
Fig.2 eine vergrößerte seitliche Schnittansicht entlang der Schnittebene II-II aus Fig.1;
Fig.3 eine vergrößerte seitliche Schnittansicht eines typischen Antriebs für die Rollen in jeder Förderbahn;
Fig.4 eine vergrößerte fragmentarische, seitliche Schnittansicht eines typischen Antriebs für die Rollen in irgendeiner Förderbahn der Trennvorrichtung;
Fig.5 eine vergrößerte fragmentarische Schnittansicht eines typischen Antriebs für die Rollen;
Fig.6A eine seitliche Schnittansicht entlang der gleichen Ebene wie in Fig.2, die eine bevorzugte Konstruktion für die Rollen darstellt;
Fig.6B eine seitliche Schnittansicht entlang der gleichen Ebene wie in Fig.6A, die eine modifizierte Konstruktion für die Rollen darstellt;
Fig.6C eine seitliche Schnittansicht entlang der gleichen Ebene wie in Fig.6A, die eine weiter modifizierte Anordnung für die Rollen darstellt;
Fig.6D eine seitliche Schnittansicht, die eine Konstruktion darstellt, in der alle Artikel-Transportbahnen identisch sind und die Oberflächen der Rollen in der Abladebahn nach unten geneigt sind;
Fig.7 eine schematische Draufsicht auf einen Förderer nach dem Stand der Technik, der viele Zonen mit unterschiedlichen Geschwindigkeiten aufweist; und
Fig.8 eine schematische Draufsicht auf eine Trenn- und Ausrichtvorrichtung für Artikel, die die Prinzipien der vorliegenden Erfindung darstellt.

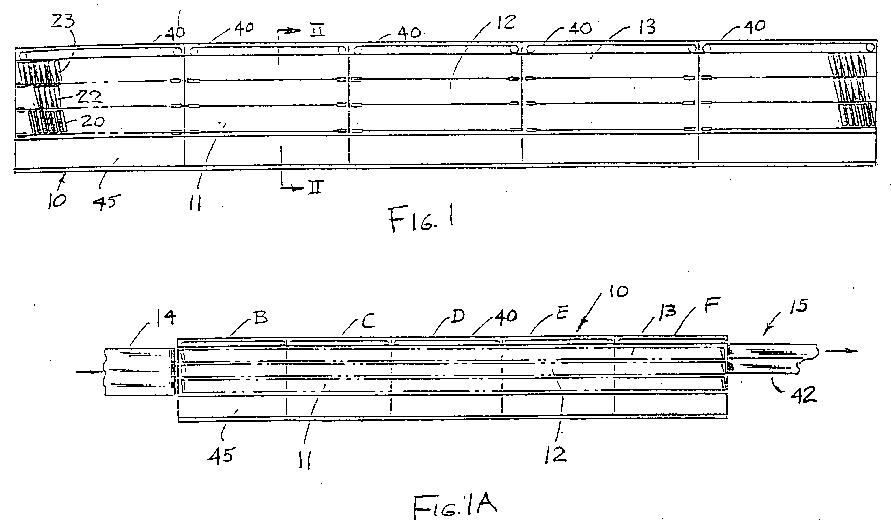

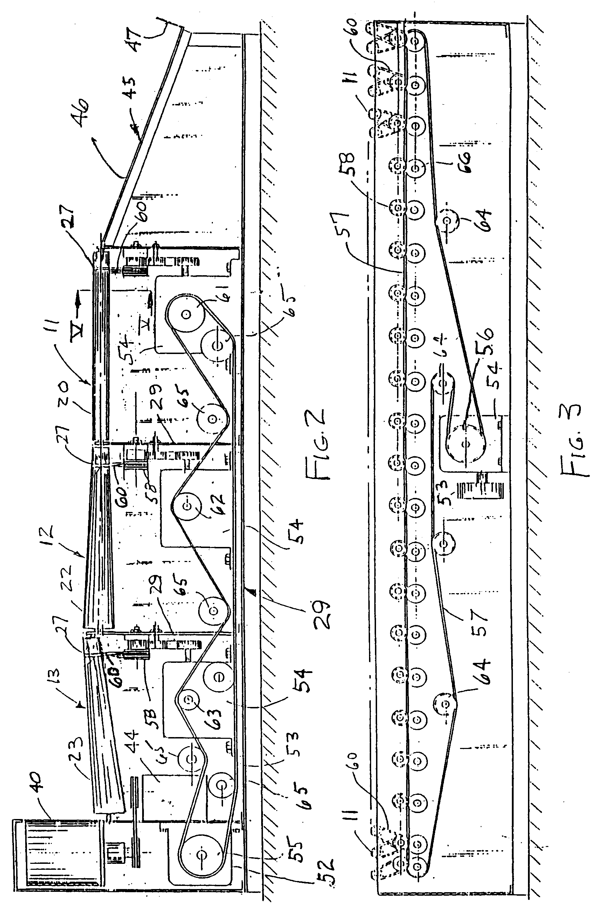

Unter Bezugnahme auf die Zeichnungen und die darin dargestellten Ausführungsbeispiele weist eine Trenn- und Ausrichtvorrichtung für Artikel 10 drei Förderbahnen auf, die alle als Aufnahmebahnen fungieren können und dies auch tun. Diese Förderbahnen schließen eine Förderbahn mit geringer Geschwindigkeit 11, eine Förderbahn mit mittlerer Geschwindigkeit 12 und eine abschließende Förderbahn 13 mit hoher Geschwindigkeit ein (Fig.1 und 1A). Die auszurichtenden Artikel oder Pakete werden über einen Eingabeförderer 14 in zufälliger Anordnung auf alle drei Förderbahnen der Trennvorrichtung 10 geliefert. Die Artikel oder Pakete werden an der gegenüberliegenden Seite von der Trennvorrichtung 10 auf einen Abgabeförderer 15 abgeladen. Während die Artikel durch die Trennvorrichtung hindurchlaufen, werden sie beschleunigt, seitwärts über die Oberfläche der Trennvorrichtung bewegt und auf der Förderbahn 13 in einer einzigen Reihe ausgerichtet, und zwar gegen oder unmittelbar in der Nähe der vertikalen Ausrichtbänder 40, die eine hochstehende vertikale Barriere bilden, die die Artikel daran hindert, seitwärts von den die Förderbahn 13 bildenden Rollen 23 heruntergeschleudert zu werden. Gemäß Fig.2 wird jedes der Ausrichtbänder 40 über einen Motor 44 angetrieben. Sie könnten ebenso über einen Primärmotor 52 unter Verwendung eines geeigneten Getriebes oder einer konventionellen Bänderverbindung angetrieben werden.

Wenn die Trennvorrichtung mit einer normalen und im wesentlichen gleichmäßigen Ladung betrieben wird, werden alle Artikel in der Förderbahn 13 gegen das Ausrichtband 40 ausgerichtet enden. Jedoch können Artikel Mit unüblicher Größe und Artikel, die nicht transversal über die Oberfläche der Trennvorrichtung laufen und am benachbarten Ausrichtband 40 auf Förderbahn 13 ausgerichtet werden können, bspw, wenn die Kapazität der Trennvorrichtung zeitweilig nicht in der Lage ist, die durch die Vorrichtung hindurchlaufende Zahl an Artikel aufzunehmen, auf einem Überlauf-Entlastungsboden 45 der Förderbahn 11 abgeladen werden müssen. Der Überlauf-Entlastungsboden 45 hat eine Oberfläche 46, die weg von dem Hauptbett der Trennvorrichtung nach unten geneigt ist in einem Winkel von ungefähr 20°. Die geneigte Oberfläche sorgt dafür, daß die Artikel durch die Gravitationskraft die Hauptoberfläche der Trennvorrichtung verlassen und gegen einen Stopper 47 zur Ruhe kommen. Diese Artikel können aufgenommen werden und an einer geeigneten Stelle und unter geeigneten Bedingungen erneut zum Eingabeförderer 14 gebracht werden, um unter besseren Umständen durch die Trennvorrichtung hindurchgeführt zu werden.

Die Rollen 20, 22 und 23 der Förderbahnen 11, 12 und 13 bilden kollektiv eine Artikel-Transportoberfläche, auf der die Artikel in Längsrichtung und zu einer Seite, welche die Abladeseite oder Förderbahn 13 der Trennvorrichtung ist, hin bewegt, auf der sie beschleunigt und parallel zur einen Kante der Trennvorrichtung ausgerichtet werden. Die Konstruktion dieser Oberfläche hat eine bevorzugte Anordnung und verschiedene Modifikationen, die teilweise von dem gewünschten Ergebnis, der Natur der Artikel und dem Volumen der zu handhabenden Artikel abhängen. Diese werden nachfolgend im Detail beschrieben. Jede der Rollen in jeder der Förderbahnen ist derart in ihrem Stützrahmen angeordnet, daß ihre Artikel-Transportoberfläche besonders effektiv ist, um den Artikel einseitig in eine Position zu bringen, in der er auf der Förderbahn 13 mit der höchsten Geschwindigkeit möglichst schnell in einer einzelnen Reine ausgerichtet werden kann. Zu diesem Zweck sind einige der Oberflächen eben. Dies wird bewerkstelligt, indem jede Mittellinie oder Potationsachse der sich verjüngenden Rollen, die die Artikel-Transportoberfläche bilden, in einem Winkel positioniert wird, der identisch zu demjenigen Winkel ist, der zwischen dieser Mittellinie und der Rollenoberfläche besteht. Dieser Winkel kann bei verschiedenen Anordnungen variiert werden, und zwar in Abhängigkeit von dem Wert der transversalen Bewegung und der Beschleunigung, welche im Unterschied zu der Vorwärtsbewegung auf die zu transportierenden Artikel übertragen werden soll. In der vorliegenden Ausführungsform ist herausgefunden worden, daß eine Neigung von ungefähr 0,22 mm (0.085 Inches) pro axialem mm (Inch) der Rollenlänge befriedigende Resultate liefert. Somit wird eine Rolle mit einer Länge von ungefähr 48,90 mm (19¹/₄ Inches) an ihrem schmalen Ende einen Durchmesser von 4,06 mm (1.6 Inches) und an ihrem breiten Ende einen Durchmesser von 8,38 mm (3.3 Inches) aufweisen.

In der bevorzugten Ausführungsform ist die Einheit derart augebildet, daß sie achslose Rollen verwenden kann. Die Rollen sind durch kurze Achsenadapter fest an den seitlichen Rahmenbauteilen befestigt. Jedoch könnten diese Rollen jeweils über eine zentrale Welle gelagert werden, oder über ein Paar Wellenabschnitte, einen an jedem Ende, die entlang der gleichen Achse ausgerichtet sind, entlang der auch die Achsenadapter ausgerichtet sein würden. In jeder der Konstruktionen stehen die Enden der Welle aus der Rolle hervor und werden über eines der Rahmenbauteile 25 oder 26 von der Trennvorrichtung oder dem zwischenliegenden Rahmenbauteil 28 (Fig.6A) abgestützt. Sowohl bei der einzelnen zentralen Welle, als auch bei dem Paar Wellen mit kurzer Länge wird die Mittellinie der Welle oder der Wellenabschnitte über die Mittellinie der Rolle zentriert. Die Rahmenbauteile 25, 26 oder 28 sind an festen Rahmenbauteilen 29 (Fig.2) mit geeigneter Festigkeit befestigt und werden von diesen gehalten. Diese Rahmenbauteilkonstruktion ist in der Förderer-Industrie sehr bekannt.

Wie vorstehend beschrieben ist die Artikel-Transportoberfläche der Trennvorrichtung in eine Vielzahl von nebeneinanderliegenden Förderbahnen 11, 12 und 13 aufgeteilt; die sich über die gesamte Länge der Einheit erstrecken. Die Anzahl dieser Bahnen hängt von der Länge und der Geschwindigkeit der Trennvorrichtung sowie der zu handhabenden Menge, für die sie ausgelegt ist, ab. Weiterhin ist auch die Länge der ganzen Einheit ein Faktor, weil bei jeder vorgegebenen Geschwindigkeit die effektive Kapazität der Trennvorrichtung von der Fähigkeit abhängen wird, falle Artikel in einer einzigen Bahn anordnen zu können. Wegen der Länge der Trennvorrichtung werden die die Artikel antreibenden Rollen in jeder Bahn von einem Ende der Einheit bis zu anderen Ende vorzugsweise mit derselben Geschwindigkeit angetrieben. Jedoch werden die Rollen in der langsamsten Förderbahn 11 mit einer geringeren Geschwindigkeit angetrieben als derjenigen von den Rollen in der mittlerer Förderbahn 12, welche wiederum mit einer geringeren Geschwindigkeit angetrieben werden als diejenigen Rollen in Förderbahn 13. Somit wird, wenn die Artikel transversal über die Oberfläche der Trennvorrichtung bewegt werden, deren Vorwärtsbewegung beschleunigt nicht nur durch den Vorwärtsschub, der durch die Rollen geschaffen wird, auf denen und über die die Artikel bewegt werden, sondern auch durch die Beschleunigung, die geschaffen wird, wenn die Artikel während ihrer Längsbewegung von Bahn zu Bahn übertragen werden. Dies resultiert aus der Tatsache, daß die Rollen in benachbarten Bahnen so angeordnet sind, daß die Artikel von den Bahnen mit den langsameren Rollen auf die Bahnen mit den schnelleren Rollen mit hoher Geschwindigkeit übergehen. Wenn weiterhin der Übergang zwischen Bahnen stattfindet, die beide sich verjüngende Rollen aufweisen, werden die Artikel von dem breiten Ende der langsameren Rollen auf das schmale Ende der schnellen Rollen der nächsten benachbarten Bahn überführt. Die Rollen der Aufnahmebahn haben eine Oberflächengeschwindigkeit an dem Aufnahme- bzw. dem Ende mit dem schmalen Durchmesser, die größer oder gleich der Oberflächengeschwindigkeit an dem breiten Ende der Rollen ist, von denen die Artikel abgeladen werden.

Dies schafft einen linearen Geschwindigkeitsanstieg über die Förderoberfläche, wobei die höchste Geschwindigkeit in der Nähe des Ausrichtbandes 40 erreicht wird. Diese Charakteristik der Oberfläche, die durch die drei parallelen und benachbarten Bahnen aus angetriebenen Rollen erzeugt wird, ist nicht nur für die Beschleunigung der Artikel bedeutsam, sondern auch für die effektive Trennung der Artikel über die Länge des Förderers. Dies ist wesentlich für die Fähigkeit der Vorrichtung, die Artikel schließlich in einer einzigen Reihe anordnen zu können, wenn sie von der Einheit abgeladen werden. Dies gilt insbesondere dann, wenn die Einheit verwendet wird, um eine große Anzahl von Artikeln mit unterschiedlichen Formen, Größen und Gewichten zu trennen, hintereinander anzuordnen und in einer einzelnen Reihe abzuladen. Der lineare Geschwindigkeitsanstieg über die Förderoberfläche erzeugt weiterhin eine vorteilhafte Rotation der Pakete, was darüber hinaus dazu führt, die Pakete zu trennen. Diese Rotation ist das Resultat, daß sich verschiedene laterale Bereiche von jedem Paket mit einer unterschiedlichen Geschwindigkeit bewegen. Diese Rotation wird vorteilhaft bei einer unterschiedlichen Rate für seitwärts benachbarte Pakete sein, was die Pakettrennung noch weiter unterstützt.

In einem Ausführungsbeispiel haben die Rollen 20 in der Förderbahn 11 einen gleichmäßigen Durchmesser über ihre Länge, und ihre zentrale Achse ist eben oder horizontal (Fig.2 und 6A). Die Rollen 20 werden mit der kleinsten Geschwindigkeit angetrieben. Die Rollen 22 der mittleren oder zwischenliegenden Bahn sind in ihrer Längsrichtung geneigt, wobei ihr kleinster Durchmesser an dem die Artikel aufnehmenden Ende ist. Dies ist benachbart zu den Rollen der Förderbahn 11 (Fig.6A). Bei dieser Konstruktion sind die Achsen der Rollen 22 von der zwischenliegenden oder zentralen Bahn so geneigt, daß sie eine kleine querlaufende Steigung zu der die Artikel kontaktierenden und transportierenden Oberfläche schaffen, wie dies durch den Buchstaben J angezeigt ist. Diese Steigung ist klein und resultiert in der bevorzugten Ausführungsform in der oberen Oberfläche der breiten Enden von den Rollen 22, die sich in der gleichen Ebene befinden wie die Oberflächen der benachbarten schmalen Enden der Rollen 23, wie dies durch die Buchstaben H und J in der Fig.6A angezeigt ist.

Die Rollen 23 in der Bahn 13 haben die gleiche Größe und Konstruktion wie die Rollen 22. Die Achsen der Rollen 23 in der Bahn 13 sind derart geneigt, daß die oberen Oberflächen dieser Rollen von den Rollen 22 nach unten abfallen werden, und zwar um den Bruchteil eines Inches, z.B um 0,95 mm (3/8 Inch), über ihre Länge, wie dies durch den Buchstaben H (Fig.6A) angezeigt ist. Somit hat die Neigung der Artikel-Transportrollen 22 und 23 in dieser Ausführungsform den gleichen Wert, jedoch verläuft die Neigungserichtung dieser beiden Bahnen von Rollen in entgegengesetzter Richtung (Buchstaben H und J), wodurch ein Scheitel (K) gebildet wird, wo die beiden Bahnen benachbart aneinander liegen. Dazu sind die Rollen 23 um einen kleinen Winkel nach unten geneigt, betrachtet von dem Punkt, der als ebene Oberfläche dient. Die Kombination der nach oben gerichteten oberen Oberflächenneigung der Rollen in der Förderbahn 12 und der nach unten gerichteten Oberflächenneigung der oberen Oberfläche der Rollen in der Förderbahn 13 schafft eine positive und schnelle Unterbrechung des Kontakts zwischen dem nachlaufenden Ende eines Artikels, der von den Rollen 22 auf die Rollen 23 überführt wird. Die sich zur Bahn 13 hinbewegenden Artikel werden durch die Rollen der Bahn 13 nicht beeinflußt, bis ihr Schwerpunkt dafür sorgt, daß sie nach unten auf die Förderbahn 13 abkippen, wodurch an einer Ecke oder Kante des Artikels ein positiver Kontakt mit den Rollen der Förderbahn 13 entsteht. Zur gleiche Zeit wird der Kontakt des Artikels mit den Rollen 22 der zwischenliegenden Bahn schnell abbrechen. Die Artikel stehen dann ganz unter dein Einfluß der Rollen 23 von Förderbahn 13. Einmal unter Kontrolle der Rollen von Förderbahn 13 werden die Artikel bewegt, weiter beschleunigt und dazu gebracht, eine Öffnung zu finden, um gegen eines der Ausrichtbänder 40 gelehnt zu werden. Das Ziel dieser Oberflächenkonfiguration ist sowohl die Beschleunigung der Artikeltrennung, als auch das Erzielen einer schnellen Ausrichtung mit dem Ausrichtband 40 für das abschließende Abladen von der Trennvorrichtung.

Fig.6B stellt eine Modifikation der oben beschriebenen Konstruktion dar. Bei dieser Konstruktion befinden sich die die Artikel kontaktierenden Oberflächen der Rollen in den beiden Förderbahnen 11 und 12 in der gleichen Ebene (Fig.6B). In diesem Fall sind jedoch die die Artikel kontaktierenden Oberflächen der Rollen 23 in der Förderbahn 13 nach unten geneigt und zwar um den gleichen Winkel H wie die Oberflächen der gleichen Rollen 23 in Fig.6A. Bei dieser Ausführungsform sind die benachbarten Endoberflächen der Rollen 23 um den Bruchteil eines Inches, bspw. ungefähr um 0,95 mm (3/8 Inch) unterhalb des Endes von der Artikel-Transportoberfläche von den mittleren Bahnrollen angeordnet, wie dies durch G gezeigt ist. Dies wird die abrupte Übertragung der Kontrolle der Artikel, die durch die in Fig.6A dargestellte Konstruktion erzielt wird, noch steigern. Wenn jedoch eine weniger abrupte Übertragung gewünscht wird, kann die benachbarte Oberfläche der Rolle 23 auf dem gleichen Level liegen wie das benachbarte Ende der Artikel-Transportoberfläche der mittleren Rolle 22 (Fig.6C). In, diesem Fall wird eine nach unten gerichtete Neigung der Oberfläche von den Rollen 23 verbleiben, um einen abrupten Kontakt mit den Rollen 23 zu erzeugen, wenn der Schwerpunkt der Artikel über das Ende der Rollen 22 hinausläuft. Der plötzliche Abfall zwischen den Oberflächen der Rollen zusammen mit der höheren Geschwindigkeit der Rollen 23 wird zu einer wesentlichen Beschleunigung und Trennung der Artikel führen. Jede Konstruktion wird die Übertragung der Artikel von der Förderbahn 12 mit der mittleren Geschwindigkeit auf die Förderbahn 13 mit der höheren Geschwindigkeit erleichtern und beschleunigen.

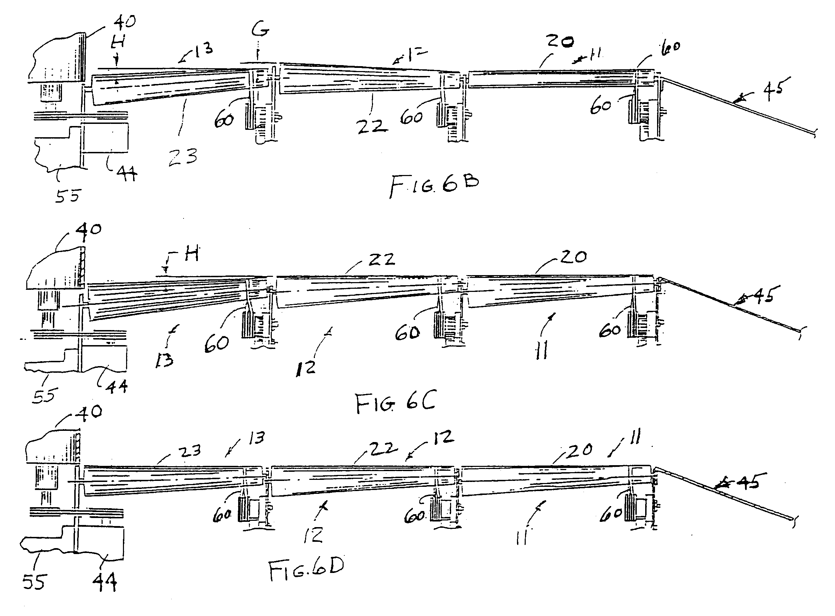

Fig.6C zeigt ebenfalls, daß die Einheit mit sich verjügenden Rollen in den Förderbahnen 11 und 12 gebaut werden kann, um die Beziehung der Förderoberflächen und den Wechsel in der Rollengeschwindigkeit zwischen den Rollen der Förderbahnen 12 und 13 aufrecht zu erhalten, wie dies in Fig.6B gezeigt ist. Fig.6D zeigt den Fall, daß sich die Rollen in allen drei Bahnen verjüngen können, wobei die Achsen der Rollen von Förderbahn 13 geneigt sind, um eine ebene Oberfläche über die gesamte Breite der Einheit zu erzeugen.

Benachbart zum schmalen Ende von allen Rollen in allen Bahnen ist ein Bandkanal 27 ausgebildet (Fig.2). Dieser ist vorgesehen, um ein Band für den Antrieb der Rollen aufzunehmen und um einen Kontakt zwischen dem Band und den Artikeln zu vermeiden. Wenn die Rollen durch andere Mittel angetrieben werden sollen, kann auf diesen Kanal oder diese Bandaussparung verzichtet werden, und ein anderes Mittel zum Antrieb der Rollen kann substituiert werden. Das Band und die Antriebsmittel werden nachfolgend beschrieben.

Die Bedeutung der verschiedenen Rollenkombinationen, die vorstehend beschrieben wurden, wird ersichtlich, wenn sie im Lichte der typischen Betriebsgeschwindigkeiten betrachtet werden, die, von einer Trennvorrichtung dieser Art gefordert werden. Die Artikel werden von einem Eingabeförderer 14 (Fig.1) aufgenommen, der ein Zuführband aufweist, das breit genug ist, um gleichzeitig alle drei Förderbänder 11, 12 und 13 der Trennvorrichtung mit einem Sortiment von Paketen mit zusammengestellten Größen, Formen und Gewichten zu beliefern, und zwar mit einer Zuführgeschwindigkeit von bspw. 2,54 m/s (500 Fuß pro Minute). Die Geschwindigkeit der die Artikel kontaktierenden Oberfläche der Rollen 20 in der langsamsten Förderbahn 11 beträgt vorzugsweise 1,63 m/s (320 Fuß pro Minute). Wenn sich die Rollen in Bahn 11 gemäß den Fig.6C und 6D verjüngen, wird die Oberflächengeschwindigkeit der Rollen an dem breiten Ende der Artikel-Transportrollen gemessen. Bei der mittleren Förderbahn 12 beträgt eine vorteilhafte Oberflächengeschwindigkeit der die Artikel kontaktierenden Oberfläche der Rollen an ihren breiten bzw. Abgabeenden 6,25 m/s (1230 Fuß pro Minute), und die Oberflächengeschwindigkeit der die Artikel kontaktierenden Oberfläche der Rollen von der innersten Förderbahn 13 beträgt an deren breiten bzw. Abgabeenden 8,94 m/s (1760 Fuß pro Minute).

Normalerweise haben die die Artikel aufnehmenden Enden der Rollen in jeder Bahn eine Oberflächengeschwindigkeit, die gleich der Geschwindigkeit von den Rollen ist, von denen die Artikel aufgenommen werden. Wegen der Verjüngung der Rollen in denjenigen Bahnen, die solche Rollen haben, steigt die Oberflächengeschwindigkeit an, wenn sich die Artikel in Längsrichtung der Rollen bewegen. Wenn sich somit die Artikel von Bahn zu Bahn bewegen entsteht ein im wesentlichen linearer Geschwindigkeitsanstieg, der eine konstante Beschleunigungskraft hervorruft, die zur Trennung der Artikel auf diese ausgeübt wird. Die Neigung oder Schrägstellung der Rollenachsen in bezug auf die Mittellinie des Förderers liefert die Artikel einer transversal agierenden Kraft aus, die deren Bewegung von den langsameren Bahnen zu den schnelleren Bahnen beschleunigt. Somit werden die Artikel sowohl in Längsrichtung als auch in Querrichtung schnell auf der Oberfläche der Trennvorrichtung verschoben, bis sie mit einem der Ausrichtbänder 40, die die äußere Kante der Förderbahn 13 bilden, in Verbindung treten. Diese Ausrichtbänder 40 werden alle mit der gleichen Geschwindigkeit angetrieben, vorzugsweise über ihre jeweiligen Primärbewegungsmittel, die 8,04 m/s (1760 Fuß pro Minute) beträgt und die gleich derjenigen Oberflächengeschwindigkeit der breiten Enden von den Rollen der benachbarten Förderbahn 13 ist. Sobald der anfängliche Kontakt mit diesen Bändern und einer Kante des Artikels zustande kommt, führt dieser zu einer Drehung der Artikel. Wenn dies eine abwärts liegende Ecke in Richtung der Artikelbewegung ist, wird der Artikel derart gedreht werden, daß seine gesamte oberhalb der Ecke liegende Seite in Kontakt mit einem der benachbarten Ausrichtbänder 40 kommen wird. Wenn die Artikelbewegung durch, einen anderen Artikel behindert wird, der nicht in Kontakt mit einem Ausrichtband 40 steht, wird die auf die Artikel ausgeübte Beschleunigung dazu führen, daß die Artikel getrennt werden, damit sie an dem Ausrichtband 40 ausgerichtet werden können. Auf diese Weise vollenden die Rollen der Hochgeschwindgkeitsbahn die Ausrichtung der Artikel in einer einzigen Reihe auf der Hochgeschwindigkeitsseite der Einheit. Auf ähnliche Weise werden die Rollen der anderen Bahnen, außer sie haben die Unterstützung der Ausrichtbänder 40 nicht, andere Artikel anordnen, Zwischenräume zwischen den Artikeln erzeugen, diese beschleunigen, rotieren und derart positionieren. daß die Artikel in einen Zwischenraum im Strom der auf Förderbahn 13 bewegten Artikel eingefügt werden können.

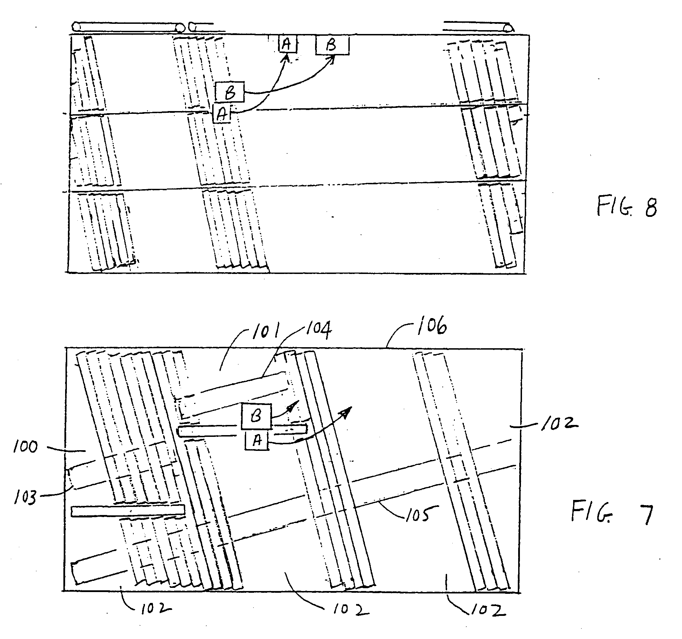

Die Fig.7 und 8 verdeutlichen diese Operation. Bis jetzt haben Förderer, die Rollen verwenden deren Rotationsachsen zu den Seiten des Förderers geneigt waren, eher als das sie senkrecht waren, die Rollen in Gruppen 100, 101, 102 angeordnet verwendet, die jeweils zur Steigerung der Geschwindigkeit in Längsrichtung des Förderers durch Bänder 103, 104 und 105 angetrieben worden sind, um die Pakete gegen eine Verzögerungsoberfläche 106 zu positionieren, indem diejenigen Pakete beschleunigt werden, die am weitesten von dem Abladebereich entfernt sind. Dies kann aus dem Vergleich der Bewegung von dem über dem Paket B liegenden Paket A in Fig.7 ersehen werden. Das von der Abladebahn bzw. der Bahn für die abschließende Ausrichtung fernliegende Paket A wird über das Paket B bereits in der abschließenden Ausrichtbahn bewegt, weil das Paket B durch die langsameren Zonen in dem Verzögerer einer Abbremsung unterworfen wird. Dies bringt das Paket A dazu, sich relativ zum Paket B weiterzubewegen. Die den Verzögerer erreichenden Kanten der Pakete werden verzögert, um die Pakete in ihre Ausrichtung zu rotieren. In der US-PS-4,039,074, die am 2.August 1977 angemeldet wurde und den Titel "TRENNVORRICHTUNG FÜR ZUFÄLLIG ANGEORDNETE PAKETE" trägt, sind die Rollen auf diese Weise in Gruppen angeordnet, so daß sie die Förderoberflächen in Abschnitte aufteilen, die sich über den Förderer erstrecken und mit fortschreitender Geschwindigkeit in Längsrichtung des Förderers (Fig.7) angeordnet sind. Eine als Bremseinrichtung ausgebildete Verzögerungsoberfläche 106, wie bspw. eine stationäre Oberfläche Mit hoher Reibung entlang der Trennvorrichtung, hält die mit ihr in Kontakt kommenden Kanten der Pakete zurück. Die US-PS-4,284,186 mit dem Titel "TRENNFÖR-DERER", die anschließend zu diesem Typ von Trennvorrichtungen angemeldet worden ist, offenbart den gleichen Grundförderer, außer daß anstelle eines Verzögerers zum Abbremesen der Paketkanten ausgeprägte geneigte Trennrahmen verwendet werden.

Die Anordnung der in diesen Patenten offenbarten und in Fig.7 dargestellten Artikel-Transportrollen ist gegensätzlich zu der in dieser Anmeldung offenbarten und in Fig.8 dargestellten Rollenkonstruktion, bei der die Oberfläche der Trennvorrichtung einen linearen Geschwindigkeitsanstieg seitwärts in Richtung des Paket-Abladebereichs schafft. In der Anordnung nach Fig.8 werden die Artikel durch die Rollen beschleunigt, wenn sie jede Bahn überschreiten und von Bahn zu Bahn kreuzen, um die Ausrichtbänder 40 zu erreichen, die sie für den Abladevorgang ausrichten, indem sie die die Bänder kontaktierenden Kanten anstelle des Verzögerns weiter befördern. Somit wird das Paket B, das sich seitwärts liegend näher an der Abladebahn bzw. der Bahn zur abschließenden Ausrichtung befindet, gegenüber dem sich über ihm befindenden Paket A weiter beschleunigt werden, wodurch ein Zwischenraum geschaffen wird, in den sich langsamer bewegende Pakete eingefügt werden können. Die Kanten der Pakete werden beschleunigt, um die Pakete für die Ausrichtung zu rotieren. Dies erhöht die Kapazität der Trennvorrichtung durch schnellere Ausrichtung der Pakete auf der abschließenden Abladebahn, ohne daß die Paketbewegung verzögert wird. Weiterhin ist die vorliegende Struktur effektiver was das Trennen von Seite-an-Seite liegenden Paketen betrifft, weil der lineare Geschwindigkeitsanstieg über dem Förderbett den trennenden Kräften selbst die kleinsten Pakete aussetzen wird.

Unter Schwerlast-Betriebsbedingungen oder anderen ungewöhnlichen Umständen kann es passieren, daß nicht alle Artikel in einer einzigen Reihe auf Förderbahn 13 ausgerichtet sein werden, wenn die das Abgabe- oder Abladeende der Trennvorrichtung erreichen. Die Ausgestaltung der Anordnung in Beziehung zur Größe der Artikel, für die zu Handhaben sie ausgelegt ist, ist derart, daß solche Artikel nur den Bruchteil von einem Prozent der gesamten Menge an beförderten Artikeln ausmachen. Diese wenigen Artikel werden entweder manuell oder durch andere Mittel befördert. Ein Verfahren zur Behebung diese Problems könnte darin bestehen, daß der Aufnahme- oder Entfernungsförderer 42 mit zwei Bahnen ausgestattet ist. Bei dieser Konstruktion würde die Entfernungsfördererbahn in einer Linie mit der Förderbahn 12 liegen und würde die wenigen nicht ausgerichteten Artikel aufnehmen und zu einem entlang der Vorrichtung angeorneten Ort bringen, wo sie durch geeignete Mittel in die Spur der Artikel zurückgeführt werden können, die ursprünglich gegen die Ausrichtbänder 40 ausgerichtet waren. Dadurch überschneiden sich diese nicht ausgerichteten Artikel nicht mit denjenigen Artikeln, die schon an den Ausrichtbändern 40 ausgerichtet worden sind. Eine andere Lösung könnte darin bestehen, daß solche Artikel zu einer Haltestation geführt werden, von wo sie zu einem geeigneten Zeitpunkt wieder in das System eingebracht werden können, um über die Trennvorrichtung geführt zu werden. In jedem Fall wird die Anzahl solcher Artikel nur einen Bruchteil der gesamten beförderten Artikel ausmachen. Auch werden die Artikel die Bewegung derjenigen Artikel nicht unterbrechen, aie in Ausrichtung gegen die Ausrichtbänder 40 bewegt werden.

Die Rollen in jeder der Förderbahnen 11, 12 und 13 werden von unten angetrieben. Zu diesem Zweck können verschiedene Anordnungen verwendet werden. Fig.1 bis 3 zeigen einen bevorzugten Antrieb für die Rollen. In der in den Fig.1 und 1A dargestellten bevorzugten Ausgestaltung ist die die Artikel transportierende und trennende Oberfläche in drei parallele Bahnen aufgeteilt, und jede der Bahnen ist wiederum in fünf Abschnitte B, C, D, E und F unterteilt, wobei die Rollen, in jeder Bahn mit der gleichen Geschwindigkeit angetrieben werden. Während es möglich ist, daß alle Rollen in einer Bahn des Förderers von einer einzigen Quelle angetrieben werden, ist es für den Servive und die Erhaltung von Vorteil, daß viele, identische Antriebe vorgesehen sind. In jedem der Abschnitte B-F treibt ein einziges Band 57 die Rollen von jeder Bahn an (Fig.3 - 5).

Fig.2 zeigt eine typische Antriebseinheit für die Rollen in jedem der Abschnitte B, C, D, E und F von der Trennvorrichtung. Somit wird die in Fig.2 und 3 dargestellte Anordnung für die Rollen in jedem Abschnitt von jeder der Förderbahnen 11, 12 und 13 wiederholt. Weil die Antriebseinheit in jedem Abschnitt identisch ist, ist die nachfolgende Beschreibung auf die Antriebseinheiten für alle Abschnitte B-F anwendbar. Die folgende Beschreibung wird auf die Art und Weise beschränkt, in der die Rollen angetrieben werden.

Jede Antriebseinheit wird durch eine separate Quelle wie bspw. dem Primärmotor 52 betrieben, die geeigneterweise unterhalb der Rollenebene angeordnet ist. Es wird ersichtlich, daß der Primärmotor auf der gegenüberliegenden Seite zu derjenigen Seite der Trennvorrichtung angeordnet sein kann, auf der es dargestellt ist, ohne die Erfindung zu beeinflussen. Vorzugsweise ist jede Antriebseinheit in der Mitte zwischen den Enden des Abschnitts angeordnet. Jedoch kann diese auch in Richtung der Enden angeordnet sein.

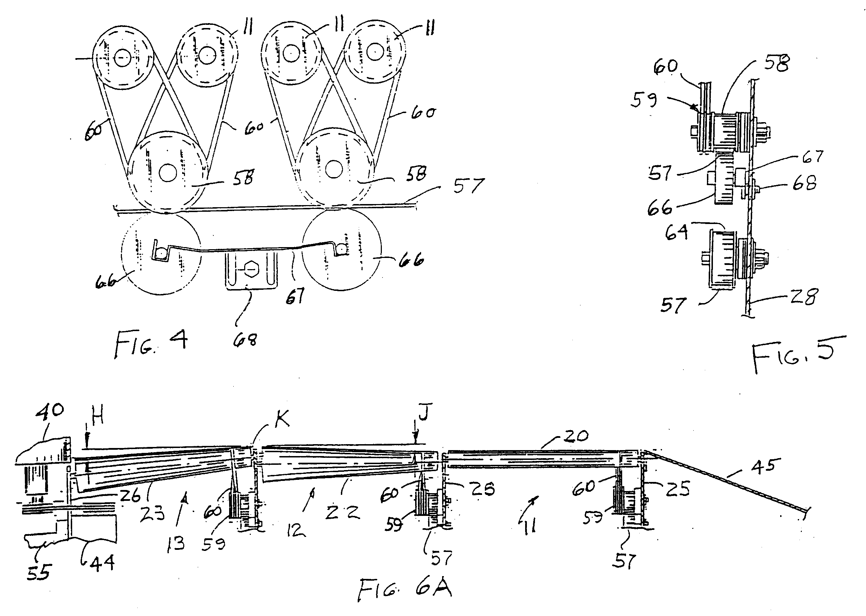

Der Primärmotor 52 treibt ein Band 53 an. Das Band 53 treibt die Riemenscheiben 61, 62 und 63 eines separaten Getriebes 54 in jeder der Förderbahnen 11, 12 und 13 für die Rollen in diesen Bahnen an. Bei der beschriebenen Konstruktion enthält jedes Getriebe 54 ein Paar getriebener Kegelräder oder Äquivalente dazu (nicht dargestellt), um eine Riemenscheibe 56 anzutreiben, die in Drehung das Band 57 antreibt. Das Band 57 treibt eine Vielzahl von Riemenscheiben 58 (Fig.2, 3, 4 und 5) an, die jeweils ein Paar Bandkanäle 59 (Fig.5) aufweisen. Durch diese Mittel treibt eine einzige Riemenscheibe mit doppelten Bandkanälen ein Paar benachbarter, die Artikel kontaktierender Rollen an, die über Bänder 60 die Artikel-Förderoberfläche der Trennvorrichtung in dieser Bahn bilden.

Weil die Rollen in jeder der Förderbahnen 11, 12 und 13 mit unterschiedlichen Geschwindigkeiten angetrieben werden, ist es selbst dann, wenn ein einziger Motor in jedem der Abschnitte B, C, D, E und F für alle Bahnen verwendet wird, bei allen Bahnen notwendig, daß Mittel zur Differentiierung der den in dieser Bahn befindlichen Artikel-Transportrollen zugeführten aktuellen Geschwindigkeit vorgesehen werden, weil die Geschwindigkeit der Rollen in jeder Bahn unterschiedlich ist. Dies kann auf unterschiedlichen Wegen erreicht werden. Ein bevorzugter Weg ist der, daß in jeder Bahn Riemenscheiben mit unterschiedlichem Durchmesser verwendet werden. Somit kann das Geschwindigkeitsdifferntial erreicht werden (Fig.2), indem die größte Antriebs-Riemenscheibe 61 für die Förderbahn 11, eine Riemenscheibe 62 von mittlerer Größe für die Förderbahn 12 und die kleinste Riemenscheibe 63 für die Förderbahn 13 verwendet wird. Das gleiche Resultat könnte erzielt werden, indem die Verhältnisse der Getriebe 54, die die Riemenscheiben 61, 62, 63 antreiben, verändert werden. Es könnte aber auch durch eine Kombination dieser verschiedenen Mittel erreicht werden. Unabhängig davon, welches Mittel für die Differentiierung der Geschwindigkeit gewählt wird, wird das Ergebnis in bezug auf die Fähigkeit der Einheit, die Artikel zu trennen und seitwärts zu übertragen und auf der Förderbahn 13 auszurichten, das gleiche bleiben. Auf jeden Fall sind die Mittel, durch die die Rollen von den Förderbahnen 11, 12 und 13 angetrieben werden, in jedem der fünf Abschnitte B, C, D, E und F gleich.

Um die Zuführung einer effektiven Antriebskraft auf die Rollen in jeder Bahn zu gewährleisten kann die Spannung auf das Band 53 eingestellt werden, indem ein oder mehrere Leitrollen oder Spannriemenscheiben 65 (Fig.2) in ihrer Position verändert werden, um die Zuführung eines positiven Antriebs auf die Rollen von jeder der Bahnen aufrecht zu erhalten. Wegen der Anforderungen an diese Bänder, wenn die Einheit voll bepackt ist und wenn verschiedene Bahnen in koordinierter Beziehung gehalten werden müssen, kann das Band 53 Zähne aufweisen, und die Riemenscheibe 55, die dieses Band zusammen mit den Riemenscheiben 61, 62 und 62 antreibt, kann ebenfalls so ausgerüstet sein. Diese Anordnung verhindert ein Verschieben und sichert einen koordinierten Betrieb von allen Bahnen.

Fig.3 zeigt eine Seitenansicht der Bandanordnung, bei der alle Artikel-Transportrollen in einer Bahn eines Abschnitts über die Getriebe 54 bandangetrieben sind. Dies wird über das Band 57 erreicht, das jede der Riemenscheiben 58 antreibt, die mit den doppelten Bandkanälen 59 in dem Abschnitt verbunden sind. An jeder der doppelten Riemenscheiben wird das Band 57 gegen die Riemenscheibe 58 gedrückt, und zwar über den Druck, der von der Leitrolle oder der Druckriemenscheibe 66 ausgeht. Diese Anordnung reduziert das Maß an Umkehrbelastung und Ermüdung, dem das Band 57 ausgesetzt ist. Wie in Fig.4 gezeigt ist, sind die Druckriemenscheiben 66 paarweise mit einem Federelement 67, wie bspw. einer Blattfeder, angeordnet, das diese in eine positive Verbindung mit dem unter jeder der Riemenscheiben 58 befindlichen Band 57 drängt. Die Blattfeder wird über geeignete Mittel wie bspw. einem Flansch 68 von einem benachbarten Rahmen 28 der Vorrichtung getragen. Die Schaffung eines geeigneten Drucks ist wichtig, weil es wesentlich ist, daß die Bewegung des Bandes 57 über die Riemenscheiben 58 auf die Bänder 60 übertragen wird. Jedes der Bänder 60 treibt eine der die Artikel bewegenden Rollen über sich an, die die Transportoberfläche der Trennvorrichtung bilden. Es sollte ebenfalls beachtet werden, daß die Riemenscheiben 58 und 66 freischwebend oder an dem Rahmenbauteil 28 nur an einem Ende befestigt sind, um ein Austauschen der Bänder 57 und 60 zu erleichtern. Eine geeignete Spannung wird dem Band 57 über die Einstellung von einer oder mehreren Riemenscheiben zugeführt, wobei die Position dieser Riemenscheiben in ausreichendem Maß verschoben werden kann, um diesen Zweck zu erreichen.

Es wird ersichtlich, daß die effektive Handhabung von großen Mengen an Artikeln und insbesondere an Artikeln mit stark unterschiedlichen Größen und Gewichten, die in Behältern mit verschiedenen Größen und Formen verpackt sind - wie bspw. in quadratischen oder rechteckigen und solchen mit unterschiedlichen Proportionen in der Länge und der Breite - ein Hauptproblem darstellt, daß über die Fähigkeit der bisher verfügbaren Vorrichtungen hinausgeht. Weiterhin haben viele Pakete und deren Inhalt, die durch die Vorrichtung gehandhabt werden müssen, nur eine begrenzte Kapazität, um Stößen, einem Zusammenprallen oder plötzlichen oder abrupten Richtungswechseln zu widerstehen. Die zu verarbeitenden Mengen sind derart hoch, daß die langsameren Vorrichtungen, die diese Probleme nicht berücksichtigen, nicht mehr wirtschaftlich sind. Die Erfindung hat diese Probleme gelöst, indem sie eine Vorrichtung mit hoher Geschwindigkeit und hoher Kapazität geschaffen hat, die eine sehr hohe Verläßlichkeit aufweist.

Veränderungen und Modifikationen in den speziell beschriebenen Ausführungsbeispielen können vorgenommen werden, ohne daß dadurch die Prinzipien der Erfindung verlassen würden. Bspw. dient die Verwendung von sich verjüngenden Rollen, die in Bahnen mit unterschiedlichen Geschwindigkeiten angeordnet sind, zur Nachbildung des linearen Geschwindigkeitsanstiegs, der durch eine individuelle lange, sich verjüngende Rolle erzielt würde. Daher wäre es auch möglich, den linearen Geschwindigkeitsanstieg durch Ersetzung der engeren Bahnen aus sich verjüngenden Rollen durch eine lange, sich verjüngende Rolle zu erreichen. Jedoch wäre es schwieriger, solche Rollen herzustellen und abzustützen. Der lineare Geschwindigkeitsanstieg könnte auch durch eine Serie von Bahnen mit kurzen Rollen mit konstantem Durchmesser erreicht werden, wobei jede Bahn mit einer zu den benachbarten Bahnen verschiedenen Geschwindigkeit angetrieben würde. Die kurzen Rollen könnten die Bahnbreite in Übereinstimmung mit der Paketgröße halten.

## Patentansprüche

1. Vorrichtung zum Trennen und Ausrichten von Artikeln, insbesondere von quaderförmigen Gegenständen, die von einem Eingabeförderer (14) in zufälliger Anordnung und Ausrichtung aufgegeben und in einer Reihe hintereinander an einen Abgabeförderer (15) übergeben werden, mit einer Artikel-Transportoberfläche (Rollen 20, 22, 23), von der die Artikel von dem Eingabeförderer (14) in Hauptförderrichtung zu dem Abgabeförderer (15) und gleichzeitig mit ansteigender Geschwindigkeit seitwärts zu der Hauptförderrichtung in Richtung eines Führungselementes (Ausrichtband 40) gefördert werden, so daß die Artikel durch Überholen in Hauptförderrichtung von etwaig benachbarten Artikel getrennt werden sowie von dem in Hauptförderrichtung verlaufendem Führungselement (Ausrichtband 40) die Artikel-Transportoberfläche (Rollen 20, 22, 23) auf der Seite mit der höheren Seitwärts-Geschwindigkeit begrenzt und die getrennten Artikel ausgerichtet werden,
dadurch gekennzeichnet,
daß die Artikel-Transportoberfläche (Rollen 20, 22, 23) derart ausgebildet ist, daß die Artikel zumindest abschittsweise mit linear ansteigender Geschwindigkeit seitwärts zur Hauptförderrichtung gefördert werden.

2. Vorrichtung nach Anspruch 1,
dadurch gekennzeichnet,
daß die Artikel-Transportoberflächen als in Hauptförderrichtung gesehen voneinander beabstandet und hintereinander angeordnete Rollen (20, 22, 23) einer Förderbahn (11, 12, 13) ausgebildet sind und die Rollen (20, 22, 23) zur Erzeugung eines seitwärts zur Hauptförderrichtung verlaufenden Anstieges der Fördergeschwindigkeit kegelförmig sind.

3. Vorrichtung nach Anspruch 1 oder 2,
dadurch gekennzeichnet,
daß die Artikel-Transportoberfläche (Rollen 20, 22, 23) in mindestens zwei angrenzende und nebeneinander in Hauptförderrichtung verlaufende Förderbahnen (11, 12, 13) aufgeteilt ist, deren Fördergeschwindigkeiten seitwärts zur Hauptförderrichtung ansteigen.

4. Vorrichtung nach Anspruch 3,
dadurch gekennzeichnet,
daß die seitwärts zur Hauptförderrichtung gerichteten Fördergeschwindigkeiten mindestens eines Teils der zueinander benachbarten Förderbahnen (11, 12, 13) derart aufeinander abgestimmt sind, daß die seitwärts zur Hauptförderrichtung gerrichtete Fördergeschwindigkeit über diese Förderbahnen hinweg linear ansteigt.

5. Vorrichtung nach Anspruch 3 oder 4,
dadurch gekennzeichnet,
daß die Förderbahnen (11, 12, 13) gerade verlaufen.

6. Vorrichtung nach einem der Ansprüche 1 bis 5,
dadurch gekennzeichnet,
daß das Führungselement (Ausrichtband 40) mit seiner Führungsfläche etwa rechtwinklig zur Artikel-Transportoberfläche (Rollen 20, 22, 23) ausgerichtet ist.

7. Vorrichtung nach einem der Ansprüche 1 bis 6,
dadurch gekennzeichnet,
daß das Führungselement (Ausrichtband 40) mit einer Geschwindigkeit antreibbar ist, die mindestens so groß wie die Fördergeschwindigkeit der benachbarten Artikel-Transportoberflächen (Rollen 20, 22, 23) ist.

8. Vorrichtung nach einem der Ansprüch 1 bis 7,
dadurch gekennzeichnet,
daß das Führungselement (Ausrichtband 40) in den Abgabeförderer (15) mündet.

9. Vorrichtung nach einem der Ansprüche 1 bis 8,
dadurch gekennzeichnet,
daß das Führungselement als Bandförderer mit einem endlos umlaufendem Ausrichtband (40) ausgebildet ist.

10. Vorrichtung nach Anspruch 9,
dadurch gekennzeichnet,
daß mehrere Bandförderer (Ausrichtband 40) in Hauptförderrichtung gesehen hintereinander angeordnet sind.

11. Vorrichtung nach einem der Ansprüche 3 bis 10,
dadurch gekennzeichnet,
daß die Rollen (20, 22, 23) jeder Förderbahn (11, 12, 13) jeweils weitestgehend mit der gleichen Geschwindigkeit antreibbar sind und die Geschwindigkeiten in Richtung des Führungselementes (Ausrichtband 40) ansteigen.

12. Vorrichtung nach einem der Ansprüche 3 bis 11,
dadurch gekennzeichnet,
daß die kegelförmigen Rollen (20, 22, 23) jeder Förderbahn (11, 12, 13) jeweils ein Ende mit einem kleineren und ein Ende mit einem größerem Durchmesser aufweisen und das Ende mit dem größeren Durchmesser jeweils dem Ende einer Rolle (20, 22, 23) mit kleinerem Durchmesser einer benachbarten Förderbahn (12, 13) mit einer höheren Geschwindigkeit oder dem Führungselement (Ausrichtband 40) benachbart ist.

13. Vorrichtung nach einem der Ansprüche 3 bis 12,
dadurch gekennzeichnet,
daß die kegelförmigen Rollen (20, 22, 23) jeder Förderbahn (11, 12, 13) mit ihren Enden an in Hauptförderrichtung verlaufenden Rahmenbauteilen (25, 26, 28, 29) der Förderbahnen (11,12,13) gelagert sind.

14. Vorrichtung nach einem der Ansprüche 3 bis 13,
dadurch gekennzeichnet,
daß die kegelförmigen Rollen (20, 22, 23) jeder Förderbahn (11, 12, 13) über einen gemeinsamen Primärmotor (52) antreibbar sind.

15. Vorrichtung nach einem der Ansprüche 3 bis 14,
dadurch gekennzeichnet,
daß die kegelförmigen Rollen (20, 22, 23) jeder Förderbahn (11, 12, 13) in Hauptförderrichtung gesehen abschnittsweise jeweils über einen gemeinsamen Primärmotor (52) antreibbar sind.

16. Vorrichtung nach Anspruch 14 oder 15,
dadurch gekennzeichnet,
daß der Primärmotor (52) über eine endloses und sich quer zur Hauptförderrichtung erstreckendes Antriebsband (53) mit je einem Getriebe (54) je Förderbahn (11, 12, 13) verbunden ist, über das über weitere Bänder (57, 60) die kegelförmigen Rollen (20, 22, 23) antreibbar sind.

17. Vorrichtung nach einem der Ansprüche 3 bis 16,
dadurch gekennzeichnet,
daß die von den kegelförmigen Rollen (20, 22, 23) der Förderbahnen (11, 12, 13) gebildete Artikel-Transportoberfläche eben ist und entsprechend die jeweiligen Mittelachsen der kegelförmigen Rollen (20, 22, 23) geneigt zur Artikel-Transportoberfläche angeordnet sind.

18. Vorrichtung nach einem der Ansprüche 3 bis 17,
dadurch gekennzeichnet,
daß die dem Führungselement (Ausrichtband 40) entferntest angeordnete Förderbahn (11) zylinderförmige Rollen (20) aufweist.

19. Vorrichtung nach einem der Ansprüche 3 bis 18,
dadurch gekennzeichnet,
daß die die Artikel kontaktierende Fläche der Rollen (23) der Förderbahn (13) mit der höchsten Geschwindigkeit, die dem Führungselement (Ausrichtband 40) benachbart ist, in Richtung des Führungselement (Ausrichtband 40) gesehen ein Gefälle (H) aufweist.

20. Vorrichtung nach einem der Ansprüche 3 bis 19,
dadurch gekennzeichnet,
daß zwischen den die Artikel kontaktierenden Flächen der einander zugewandten Enden der Rollen (22, 23) der Förderbahn (13) mit der höchsten Geschwindigkeit und der benachbarten Förderbahn (12) ein Höhenunterschied (Abstand G) vorgesehen ist, und die Rollen (23) der Förderbahn (13) mit der höchsten Geschwindigkeit tiefer als die Rollen (22) der benachbarten Rollenbahn (12) liegen.

21. Vorrichtung nach Anspruch 20,
dadurch gekennzeichnet,
daß der Höhenunterschied (Abstand G) geringer als 25 mm ist.

22. Vorrichtung nach einem der Ansprüche 3 bis 21,
dadurch gekennzeichnet,
daß die die Artikel kontaktierende Fläche der Rollen (22) der der Förderbahn (13) mit der höchsten Geschwindigkeit benachbarten Förderbahn (12) in Richtung des Führungselement (Ausrichtband 40) gesehen eine Steigung (J) aufweist.

23. Vorrichtung nach einem der Ansprüche 3 bis 22,
dadurch gekennzeichnet,
daß die kegelförmigen Rollen (20, 22, 23) jeder Förderbahn (11, 12, 13) jeweils mit ihren Mittelachsen parallel zueinander ausgerichtet sind.

## Claims

1. An apparatus for separating and aligning articles, in particular cuboid objects, which are charged by a charging conveyor (14) in a random arrangement and alignment and are transferred to a delivery conveyor (15) in a line one after the other, with an article-transporting surface (rollers 20, 22, 23) by which the articles are conveyed from the charging conveyor (14) in the main direction of conveyance to the delivery conveyor (15) and are conveyed simultaneously with increasing speed laterally to the main direction of conveyance in the direction of a guide element (alignment belt 40), so that the articles are separated from any adjacent articles by overtaking in the main direction of conveyance and the article-transporting surface (rollers 20, 22, 23) is limited on the side having the higher lateral speed by the guide element (alignment belt 40) running in the main direction of conveyance and the separated articles are aligned,
characterised in that
the article-transporting surface (rollers 20, 22, 23) is designed such that the articles, at least in sections, are conveyed laterally to the main direction of conveyance at a speed which increases linearly.

2. An apparatus according to claim 1, characterised in that the article-transporting surfaces are designed as rollers (20, 22, 23) of a conveyor track (11, 12, 13) spaced apart from each other and arranged one behind the other, viewed in the main direction of conveyance, and the rollers (20, 22, 23) are conical in order to produce an increase in the conveying speed which runs laterally to the main direction of conveyance.

3. An apparatus according to Claim 1 or 2, characterised in that the article-transporting surface (rollers 20, 22, 23) is divided up into at least two adjoining conveyor tracks (11, 12, 13) extending adjacent to each other in the main direction of conveyance, the conveying speeds of which increase laterally to the main direction of conveyance.

4. An apparatus according to Claim 3, characterised in that the conveying speeds of at least part of the adjacent conveyor tracks (11, 12, 13) directed laterally to the main direction of conveyance are matched to one another such that the conveying speed directed laterally to the main direction of conveyance increases linearly over these conveyor tracks.

5. An apparatus according to Claim 3 or 4, characterised in that the conveyor tracks (11, 12, 13) run straight.

6. An apparatus according to one of Claims 1 to 5, characterised in that the guide element (alignment belt 40) is aligned with its guide surface approximately at right-angles to the article-transporting surface (rollers 20, 22, 23).

7. An apparatus according to one of Claims 1 to 6, characterised in that the guide element (alignment belt 40) can be driven at a speed which is at least as great as the conveying speed of the adjoining article-transporting surfaces (rollers 20, 22, 23).

8. An apparatus according to one of Claims 1 to 7, characterised in that the guide element (alignment belt 40) opens into the delivery conveyor (15).

9. An apparatus according to one of Claims 1 to 8, characterised in that the guide element is designed as a belt conveyor with an endless revolving alignment belt (40).

10. An apparatus according to Claim 9, characterised in that a plurality of belt conveyors (alignment belt 40) are arranged one behind the other, viewed in the main direction of conveyance.

11. An apparatus according to one of Claims 3 to 10, characterised in that the rollers (20, 22, 23) of each conveyor track (11, 12, 13) are in each case drivable to a very great extent at the same speed and the speeds increase in the direction of the guide element (alignment belt 40).

12. An apparatus according to one of Claims 3 to 11, characterised in that the conical rollers (20, 22, 23) of each conveyor track (11, 12, 13) each have an end with a smaller and an end with a larger diameter and the end with the larger diameter in each case is adjacent to the end of a roller (20, 22, 23) with a smaller diameter of an adjacent conveyor track (12, 13) with a higher speed or to the guide element (alignment belt 40).

13. An apparatus according to one of claims 3 to 12, characterised in that the conical rollers (20, 22, 23) of each conveyor track (11, 12, 13) are mounted by their ends on frame components (25, 26, 28, 29) of the conveying tracks (11, 12, 13) which extend in the main direction of conveyance.

14. An apparatus according to one of Claims 3 to 13, characterised in that the conical rollers (20, 22, 23) of each conveyor track (11, 12, 13) can be driven by means of a common primary motor (52).

15. An apparatus according to one of Claims 3 to 14, characterised in that the conical rollers (20, 22, 23) of each conveyor track (11, 12, 13), viewed in the main direction of conveyance, can each be driven in sections by means of a common primary motor (52).

16. An apparatus according to Claim 14 or 15, characterised in that the primary motor (52) is connected via an endless drive belt (53) extending transversely to the main direction of conveyance to one gear mechanism (54) per conveyor track (11, 12, 13), by means of which the conical rollers (20, 22, 23) can be driven by means of additional belts (57, 60).

17. An apparatus according to one of Claims 3 to 16, characterised in that the article-transporting surface formed by the conical rollers (20, 22, 23) of the conveyor tracks (11, 12, 13) is flat and correspondingly the respective centre axes of the conical rollers (20, 22, 23) are inclined relative to the article-transporting surface.

18. An apparatus according to one of Claims 3 to 17, characterised in that the conveyor track (11) most remote from the guide element (alignment belt 40) has cylindrical rollers (20).

19. An apparatus according to one of Claims 3 to 18, characterised in that the surface, contacting the articles, of the rollers (23) of the conveyor (13) having the highest speed, which is adjacent to the guide element (alignment belt 40) has a descending gradient (H), viewed in the direction of the guide element (alignment belt 40).

20. An apparatus according to one of claims 3 to 19, characterised in that a difference in height (distance G) is provided between the surfaces, contacting the articles, of the ends of the rollers (22, 23) which face each other of the conveyor track (13) having the highest speed and the adjacent conveyor track (12), and the rollers (23) of the conveyor belt (13) having the highest speed are lower than the rollers (22) of the adjacent roller track (12).

21. An apparatus according to Claim 20, characterised in that the difference in height (distance G) is less than 25 mm.

22. An apparatus according to one of claims 3 to 21, characterised in that the surface, contacting the articles, of the rollers (22) of the conveyor track (12) adjacent to the conveyor track (13) having the highest speed have an ascending gradient (J), viewed in the direction of the guide element (alignment belt 40).

23. An apparatus according to one of Claims 3 to 22, characterised in that the conical rollers (20, 22, 23) of each conveyor track (11, 12, 13) are in each case aligned with their centre axes parallel to one another.

## Revendications

1. Dispositif pour séparer et aligner des articles, en particulier des objets quadratriques, qui sont amenés par un transporteur d'entrée (14) dans un agencement et une orientation au hasard et sont transmis en une rangée l'un derrière l'autre à un transporteur de sortie (15), ayant une surface de transport d'articles (rouleaux 20,22,23), de laquelle les articles sont transportés du transporteur d'entrée (14) dans la direction de transport principale vers le transporteur de sortie (15) et, simultanément, avec une vitesse croissante latéralement à la direction de transport principale en direction d'un élément de guidage (bande d'alignement 40), de sorte que les articles sont séparés d'articles sensiblement voisins par dépassement dans la direction de transport principale, ainsi que la surface de transport des articles (rouleaux 20,22,23) est limitée par l'élément de guidage (bande d'alignement 40) s'étendant dans la direction de transport principale sur le côté ayant la vitesse latérale la plus élevée et les articles séparés sont alignés,
caractérisé en ce que la surface de transport des articles (rouleaux 20,22,23) est réalisée de sorte que les articles sont transportés au moins par tronçon avec une vitesse linéairement croissante latéralement à la direction de transport principale.

2. Dispositif selon la revendication 1,
caractérisé en ce que les surfaces de transport des articles sont réalisées comme des rouleaux (20,22,23), agencés l'un derrière l'autre et de façon écartée l'un de l'autre dans la direction de transport principale, d'une voie de transport (11,12,13), et les rouleaux (20,22,23) sont coniques pour engendrer une augmentation, latérale par rapport à la direction de transport principale, de la vitesse de transport.

3. Dispositif selon la revendication 1 ou 2,
caractérisé en ce que la surface de transport des articles (rouleaux 20,22,23) est subdivisée en au moins deux voies de transport (11,12,13) adjacentes et s'étendant l'une à côté de l'autre dans la direction de transport principale, dont les vitesses de transport croissent latéralement par rapport à la direction de transport principale.

4. Dispositif selon la revendication 3,
caractérisé en ce que les vitesses de transport orientées latéralement par rapport à la direction de transport principale d'au moins une partie des voies de transport (11,12,13) voisines l'une par rapport à l'autre sont déterminées les unes par rapport aux autres de sorte que la vitesse de transport orientée latéralement par rapport à la direction de transport principale augmente linéairement hors de ces voies de transport.

5. Dispositif selon la revendication 3 ou 4,
caractérisé en ce que les voies de transport (11,12,13) s'étendent de façon rectiligne.

6. Dispositif selon une des revendications 1 à 5,
caractérisé en ce que l'élément de guidage (bande d'alignement 40), avec sa surface de guidage, est orienté sensiblement à angle droit par rapport à la surface de transport des articles (rouleaux 20,22,23).

7. Dispositif selon une des revendications 1 à 6,
caractérisé en ce que l'élément de guidage (bande d'alignement 40) peut être entraîné à une vitesse qui est au moins aussi grande que la vitesse de transport des surfaces de transport d'articles voisines (rouleaux 20,22,23).

8. Dispositif selon une des revendications 1 à 7,
caractérisé en ce que l'élément de guidage (bande d'alignement 40) débouche dans le transporteur de sortie (15).

9. Dispositif selon une des revendications 1 à 8,
caractérisé en ce que l'élément de guidage est réalisé comme transporteur à bande comportant une bande d'alignement (40) rotative sans fin.

10. Dispositif selon la revendication 9,
caractérisé en ce que plusieurs transporteurs à bande (bande d'alignement 40) sont agencés l'un derrière l'autre dans la direction de transport principale.

11. Dispositif selon une des revendications 3 à 10,
caractérisé en ce que les rouleaux (20,22,23) de chaque voie de transport (11,12,13) peuvent être entraînés, à chaque fois le plus possible à la même vitesse, et les vitesses croissent en direction de l'élément de guidage (bande d'alignement 40).

12. Dispositif selon une des revendications 3 à 11,
caractérisé en ce que les rouleaux coniques (20,22,23) de chaque voie de transport (11,12,13) présentent, à chaque fois, une extrémité ayant un plus petit diamètre et une extrémité ayant un plus grand diamètre, et l'extrémité ayant le plus grand diamètre est voisine, à chaque fois, de l'extrémité d'un rouleau (20,22,23) ayant un plus petit diamètre d'une voie de transport voisine (12,13) ayant une vitesse plus élevée ou de l'élément de guidage (bande d'alignement 40).

13. Dispositif selon une des revendications 3 à 12,
caractérisé en ce que les rouleaux coniques (20,22,23) de chaque voie de transport (11,12,13) sont montés, par leurs extrémités, sur des parties de bâti (25,26,28,29), s'étendant dans la direction de transport principale, des voies de transport (11,12,13).

14. Dispositif selon une des revendications 3 à 13,
caractérisé en ce que les rouleaux coniques (20,22,23) de chaque bande de transport (11,12,13) peuvent être entraînés par l'intermédiaire d'un moteur primaire commun (52).

15. Dispositif selon une des revendications 3 à 14,
caractérisé en ce que les rouleaux coniques (20,22,23) de chaque voie de transport (11,12,13) peuvent être entraînés, dans la direction de transport principale, par tronçon, à chaque fois, par l'intermédiaire d'un moteur primaire commun (52).

16. Dispositif selon la revendications 14 ou 15,
caractérisé en ce que le moteur primaire (52) est relié à une transmission (54) de chaque voie de transport (11,12,13) par l'intermédiaire d'une bande d'entraînement sans fin et s'étendant transversalement à la direction de transport principale (53), transmission par l'intermédiaire de laquelle les rouleaux coniques (20,22,23) peuvent être entraînés par l'intermédiaire d'autres bandes (57,60).

17. Dispositif selon une des revendications 3 à 16,
caractérisé en ce que la surface de transport des articles formée par les rouleaux coniques (20,22,23) des voies de transport (11,12,13) est plane et, de façon correspondante, les axes centraux respectifs des rouleaux coniques (20,22,23) sont agencés de façon inclinée par rapport à la surface de transport des articles.

18. Dispositif selon une des revendications 3 à 17,
caractérisé en ce que la voie de transport (11) agencée le plus loin de l'élément de guidage (bande d'alignement 40) présente des rouleaux cylindriques (20).

19. Dispositif selon une des revendications 3 à 18,
caractérisé en ce que la surface, au contact des articles, des rouleaux (23) de la voie de transport (13) ayant la vitesse la plus élevée, qui est voisine de l'élément de guidage (bande d'alignement 40), présente, en direction de l'élément de guidage (bande d'alignement 40), une pente (H).

20. Dispositif selon une des revendications 3 à 19,
caractérisé en ce qu'une différence de hauteur (distance G) est prévue entre les surfaces au contact des articles des extrémités en regard l'une de l'autre des rouleaux (22,23) de la voie de transport (13) ayant la vitesse la plus élevée et de la voie de transport voisine (12), et les rouleaux (23) de la voie de transport (13) ayant la vitesse la plus élevée se trouvent plus bas que les rouleaux (22) de la voie de transport voisine (12).

21. Dispositif selon la revendication 20,
caractérisé en ce que la différence de hauteur (distance G) est inférieure à 25 mm.

22. Dispositif selon une des revendications 3 à 21,
caractérisé en ce que la surface au contact des articles des rouleaux (22) de la voie de transport (12) voisine de la voie de transport (13) ayant la vitesse la plus élevée présente, en direction de l'élément de guidage (bande d'alignement 40), une rampe (J).

23. Dispositif selon une des revendications 3 à 22,
caractérisé en ce que les rouleaux coniques (20,22,23) de chaque voie de transport (11,12,13) sont orientés à chaque fois parallèlement les uns aux autres par leurs axes centraux.
